# EUROPEAN PATENT APPLICATION

(11) **EP 4 530 141 A1**
(43) Date of publication of application: **02.04.2025**
(21) Application number: 23199720.6
(22) Date of filing: 26.09.2023
(51) Int. Cl.: B60T 17/00, B01D 53/26, F15B 13/04, F16K 11/07, F16K 27/04, F16K 31/122

(54) **TWIN CHAMBER AIR DRYER AND ELECTROPNEUMATIC SYSTEM FOR A COMMERCIAL VEHICLE**

(71) Applicant: ZF CV Systems Europe BV, 1170 Brüssel (BE)
(72) Inventor: SEMENIUK, Maciej, 50-330 Wroclaw (PL); CHAMOT, Marcin, 58-400 Kamienna Góra (PL)
(74) Representative: Copi, Joachim

(57) **Abstract**

Twin chamber air dryer (1) comprising: an air inlet (4), an air outlet (8), a first venting outlet (14), a first and a second desiccant cartridge (30, 31), and a spool valve (60) having a spool valve exchange channels connected to the respective desiccant cartridge (30, 31); a control port for receiving a control signal; a first piston part (70a) assigned to a first spool valve exchange channel (63a); a second piston part (70b) assigned to a second spool valve exchange channel (64a); wherein said spool valve (60) is switchable between a first and a second switching position by collectively actuating said first and second piston part via the same control signal.

## Description

The invention generally relates to a twin chamber air dryer for an electropneumatic system of a commercial vehicle and an electropneumatic system comprising the twin chamber air dryer.

### Background of the invention

Electropneumatic systems in commercial vehicles generally comprise a compressor, an air dryer unit for drying and filtering the compressed air delivered by the compressor, and consumer circuits supplied with the dried compressed air, wherein the consumer circuits in particular include pneumatic brake circuits and air suspension systems. The air dryer unit generally comprises one or more desiccant cartridges filled with moisture-adsorbing materials like granulate. The compressed air is dried or de-moisturized in a drying mode, and the dried compressed air is then supplied to the subsequent consumer circuits. The desiccant cartridge is afterwards regenerated or purged in a regeneration mode, in which air flows in the reverse direction through the desiccant cartridge to a venting outlet.

To provide a continuous flow of compressed air, twin chamber air dryers are known, which comprise two desiccant cartridges operated in alternating operation modes. In a first operation mode of the twin chamber air dryer, the compressed air flows through the first desiccant cartridge in drying mode and a first inlet of a double check valve to an air outlet which is connected to the consumer circuits. In this first operation mode, the second desiccant cartridge is purged in regeneration mode by a steady flow of compressed air flowing in the reverse direction. Subsequently, a control unit switches into a second operation mode of the twin chamber air dryer, in which the air streams are reversed, thereby using the second desiccant cartridge in drying mode for drying or de-moisturizing the compressed air and purging the first desiccant cartridge in regeneration mode.

An electropneumatic valve assembly is provided for switching between the two operation modes of the twin chamber air dryer, the valve assembly normally consisting of at least two 3/2 valves. A first 3/2 valve is connected to a control valve being in electronic connection with the control unit. Once the control unit commands to operate the twin chamber air dryer in a first operation mode, the control valve (usually a solenoid-valve) provides a pneumatic control signal to the control port of the first 3/2 valve which in turn provides the compressed air delivered by the compressor to the first desiccant cartridge, being operated in drying mode. The dried compressed air provided by the first desiccant cartridge is directed to the control port of the second 3/2 valve of the valve assembly, switching the second 3/2 valve such that it connects the second desiccant cartridge to a first venting outlet, allowing the second desiccant cartridge to be operated in regeneration mode.

Once the control unit commands to switch the operation mode of the twin chamber air dryer, the missing pneumatic control signal is switching the first 3/2 valve, leading to the first desiccant cartridge being connected to the first venting outlet, allowing the first desiccant cartridge to be operated in regeneration mode. Consequently, no more dried compressed air is directed to the control port of the second 3/2 valve, leading to a switching of the second 3/2 valve and to the second desiccant cartridge being connected to the air inlet delivering compressed air by the compressor to the second desiccant cartridge, being operated in drying mode.

There are several drawbacks for this existing switching solutions:
As the second 3/2 valve is controlled by the dried compressed air of the first desiccant cartridge, a high start-up airflow is necessary to force sure and steady state of operation and start cycling between the different operation modes. Such a high start-up airflow is achieved by forcing the compressor to run with proper airflow or high rotations per minute, thus, consuming more energy. Further, pressure peaks on the air inlet of the twin chamber air dryer, when the 3/2 valves are switching, might even cause a damage to the compressor or a noisy opening of the safety valve, if present in the line, and annoyance to the driver.

Further, due to the asymmetry in the switching process, i.e., the two separated valves are not switched simultaneously, as they rely on different (pneumatic) control signals, uneven cartridge load might be induced. Further, the 3/2 valves themselves require complicated connections within the body of the twin chamber air dryer.

### Summary of the invention

It is therefore an object of the invention to provide a twin chamber air dryer and an electropneumatic system comprising such a twin chamber air dryer, which offer a steady supply of compressed air with reduced drawbacks.

According to the invention, a twin chamber air dryer and an electropneumatic system according to the independent claims is provided. The subclaims describe preferred embodiments.

According to the invention, a twin chamber air dryer, for use in an electropneumatic system of a commercial vehicle, is comprising:
- an air inlet to be supplied with compressed air from a compressor,
- an air outlet for delivering dried compressed air to at least one consumer circuit,
- a first venting outlet for exhausting air;
- a first desiccant cartridge and a second desiccant cartridge, each being selectively operatable in a drying mode and a regeneration mode; and
- a spool valve comprising
   --- a spool valve casing;
   --- a first spool valve exchange channel flow-connected to said first desiccant cartridge;
   --- a second spool valve exchange channel flow-connected to said second desiccant cartridge;
   --- a control port for receiving a control signal specifying an operation mode of the twin chamber air dryer;
   --- a first piston part assigned to said first spool valve exchange channel;
   --- a second piston part assigned to said second spool valve exchange channel;
   wherein said spool valve is switchable between a first switching position and a second switching position by jointly or collectively actuating said first piston part and said second piston part via the same (electronic or pneumatic) control signal (electronically or pneumatically) received on the (electric or pneumatic) control port for jointly or collectively moving said first piston part and said second piston part within a valve chamber formed in said spool valve casing such that
- in said first switching position of said spool valve said first piston part is flow-connecting said first spool valve exchange channel to said air inlet for operating said first desiccant cartridge in drying mode, and said second piston part is flow-connecting said second spool valve exchange channel to said first venting outlet for operating said second desiccant cartridge in regeneration mode, and
- in said second switching position of said spool valve said first piston part is flow-connecting said first spool valve exchange channel to said first venting outlet for operating said first desiccant cartridge in regeneration mode and said second piston part is flow-connecting said second spool valve exchange channel to said air inlet for operating said second desiccant cartridge in drying mode.

Further, an electropneumatic system for use in a commercial vehicle is provided comprising the inventive twin chamber air dryer and a control unit being adapted to switch the operation mode of the twin chamber air dryer by directly or indirectly specifying the control signal transmitted to the control port of the spool valve, e.g.,
- by controlling an additional operating valve, in particular a 3/2-operating valve, that outputs a pneumatic control signal to the (pneumatic) control port of the spool valve for switching the spool valve, or
- by generating an electronic control signal that is outputted to or directed to the (electronic) control port of the spool valve for switching the spool valve.

The inventive idea has several advantages over the prior art:
As the spool valve is always switching the piston parts simultaneously (in dependence on the same control signal) the state of the cartridges is geometrically dependent and always reverse to each other. Thus, the geometry of the spool valve is arranged in such a way, that at the same time one of the cartridges is vented to the atmosphere, the other cartridge is connected to the supply, and vice versa. This prevents uneven cartridge load, as simultaneously switching can be provided. Consequently, a high start-up airflow is not necessary any more to force sure and steady state of operation and start cycling between the different operation modes, reducing energy consumption. This also puts less stress on the parts of the valves, e.g., sealing members. Further, pressure peaks on the air inlet of the twin chamber air dryer, can be omitted, as well as a noisy switching behavior. Further, pneumatic lines can be omitted, reducing the wiring effort and complexity.

Further, an easier sealing concept can be realized, wherein, according to a preferred embodiment of the invention, said first piston part and said second piston part each comprise sealing members, said sealing members selectively cooperating with a contour of an interior wall of said valve chamber forming a first supply passage and a first exhaust passage, each assigned to said first piston part, and a second supply passage and a second exhaust passage, each assigned to said second piston part.

Preferably, it is intended, that said sealing members selectively cooperating with said contour of said interior wall of said valve chamber in such a way that
- depending on the position of said first piston part inside the valve chamber said first supply passage and said first exhaust passage are selectively opened or closed, wherein said first supply passage, in its open state, is flow-connecting the first spool valve exchange channel assigned to the first piston part with said air inlet and said first exhaust passage, in its open state, is flow-connecting said first spool valve exchange channel assigned to the first piston part with said first venting outlet, and
- depending on the position of said second piston part inside the valve chamber said second supply passage and said second exhaust passage are selectively opened or closed, wherein said second supply passage, in its open state, is flow-connecting the second spool valve exchange channel assigned to the second piston part with said air inlet and said second exhaust passage, in its open state, is flow-connecting said second spool valve exchange channel assigned to the second piston part with said first venting outlet.

This provides an easy way of setting the regeneration mode or the drying mode for the respective desiccant cartridge by selectively and simultaneously opening and closing or activating and deactivating the respective air flow passages via the respective piston part.

According to a further embodiment, said first supply passage and said first exhaust passage are formed between said first piston part and said interior wall, and said second supply passage and said second exhaust passage are formed between said second piston part and said interior wall. This allows for an easy way of opening or closing the respective channels by relocating the respective piston part, wherein in a preferred embodiment, this is accomplished if said contour of said interior wall comprises a first undercut and a second undercut and each of said piston parts comprises a first outer sealing member, a second outer sealing member and an intermediate sealing member in-between.

If the piston parts are relocated, the sealing members are also relocated in respect to the interior wall and the undercuts. This allows for a unique interaction between the interior wall and the sealing members, wherein, according to a preferred embodiment, several states are possible:
- in the open state of said first supply passage said first outer sealing member mounted on said first piston part is compressed while touching said interior wall spaced apart from said first undercut and said intermediate sealing member mounted on said first piston part is uncompressed and located in the region of said first undercut in said interior wall, such that said interior sealing member mounted on said first piston part is not touching said interior wall allowing air flowing through said first supply passage, and
- in the closed state of said first supply passage said first outer sealing member mounted on said first piston part and said intermediate sealing member mounted on said first piston part are compressed while touching said interior wall spaced apart from said first undercut preventing air from flowing through said first supply passage.

Further,
- in the open state of said first exhaust passage said intermediate sealing member mounted on said first piston part is compressed while touching said interior wall spaced apart from said first undercut and said second outer sealing member mounted on said first piston part is uncompressed and located in the region of said first undercut in said interior wall, such that said second outer sealing member mounted on said first piston part is not touching said interior wall allowing air flowing through said first exhaust passage, and
- in the closed state of said first exhaust passage said second outer sealing member mounted on said first piston part is compressed while touching said interior wall spaced apart from said first undercut preventing air from flowing through said first exhaust passage.

Further,
- in the open state of said second supply passage said first outer sealing member mounted on said second piston part is compressed while touching said interior wall spaced apart from said second undercut and said intermediate sealing member mounted on said second piston part is uncompressed and located in the region of said second undercut in said interior wall, such that said interior sealing member mounted on said second piston part is not touching said interior wall allowing air flowing through said second supply passage, and
- in the closed state of said second supply passage said first outer sealing member mounted on said second piston part and said intermediate sealing member mounted on said second piston part are compressed while touching said interior wall spaced apart from said second undercut preventing air from flowing through said second supply passage.

Further,
- in the open state of said second exhaust passage said intermediate sealing member mounted on said second piston part is compressed while touching said interior wall spaced apart from said second undercut and said second outer sealing member mounted on said second piston part is uncompressed and located in the region of said second undercut in said interior wall, such that said second outer sealing member mounted on said second piston part is not touching said interior wall allowing air flowing through said second exhaust passage, and
- in the closed state of said second exhaust passage said second outer sealing member mounted on said second piston part is compressed while touching said interior wall spaced apart from said second undercut preventing air from flowing through said second exhaust passage.

Thus, the sealing members are selectively compressed and uncompressed via an appropriate interaction with the contoured interior wall, providing a secure and easy way of opening and closing of the different flow channels, in particular, in a simultaneous way for both piston parts. In particular, said sealing members selectively cooperating with said contour of said interior wall of said valve chamber in such a way that on bringing said first supply passage into its closed state said first exhaust passage is brought into its opened state, and vice versa, and on bringing said second supply passage into its closed state said second exhaust passage is brought into its open state, and vice versa. This allows for precise setting of the drying or regeneration mode of the respective cartridge.

According to a preferred embodiment of the invention, said sealing members selectively cooperating with said contour of said interior wall of said valve chamber in such a way that on bringing said first supply passage into its closed state said second supply passage is brought into its open state, and vice versa, and on bringing said first exhaust passage into its closed state said second exhaust passage is brought into its open state, and vice versa, for selectively operating the first desiccant cartridge assigned to the first supply passage and the first exhaust passage in regeneration mode while conversely the second desiccant cartridge assigned to the second supply passage and the second exhaust passage is operated in drying mode, and vice versa. This allows for effectively and simultaneous switching between the different modes for the cartridges.

According to a preferred embodiment, the spool valve is construed such that
- in said first switching position of said spool valve said first piston part is located inside the valve chamber such that said sealing members attached to said first piston part are opening said first supply passage and closing said first exhaust passage, and said second piston part is positioned inside the valve chamber such that said sealing members on said second piston part are closing said second supply passage and opening said second exhaust passage, for operating said first desiccant cartridge in drying mode and said second desiccant cartridge in regeneration mode, and
- in said second switching position of said spool valve said first piston part is located inside the valve chamber such that said sealing members attached to said first piston part are closing said first supply passage and opening said first exhaust passage, and said second piston part is positioned inside the valve chamber such that said sealing members on said second piston part are opening said second supply passage and closing said second exhaust passage, for operating said first desiccant cartridge in regeneration mode and said second desiccant cartridge in drying mode.

According to a preferred embodiment, said sealing members are formed as o-rings having a circular shape and circular cross-section, or are formed as gaskets having a non-circular-shape and/or a non-circular cross-section. This allows for an effective and fully circumferential cooperation of the respective sealing member on the respective piston part, which is preferably also circular, with the interior wall.

In a further embodiment, said sealing members are formfitted with (or interlocking with) and/or materially bonded to the respective piston part. Thus, the sealing members can be attached to the respective piston part in a flexible way in order to cooperate with the interior wall.

In a preferred embodiment,
- in said first switching position said first spool valve exchange channel is flow-connected to said air inlet via a first supply channel, being formed by a first interior inside said first piston part or being attached to said first piston part, and/or
- in said second switching position said second spool valve exchange channel is flow-connected to said air inlet via a second supply channel, being formed by a second interior inside said second piston part or being attached to said second piston part.

This allows for an easy way of directing the air flow through the spool valve to the respective flow channels and passages for supplying compressed air.

In a further embodiment,
- in said second switching position said first spool valve exchange channel is flow-connected to said first venting outlet via a first exhaust channel, being formed between a first outer wall of said first piston part and said interior wall of said valve chamber, and/or
- in said first switching position said second spool valve exchange channel is flow-connected to said first venting outlet via a second exhaust channel, being formed between a second outer wall of said second piston part and said interior wall of said valve chamber.

This allows for an easy way of directing the air flow through the spool valve to the respective flow channels and passages for venting the air, wherein this can be easily done independently of the air flow for supplying compressed air.

According to a further embodiment, in said first switching position as well as in said second switching position said first supply channel is sealed against said first exhaust channel by said sealing members, and said second supply channel is sealed against said second exhaust channel by said sealing members. This can easily ensure that airflow is not mixed between both piston parts.

According to a further embodiment, said control signal is electronically or pneumatically receivable on said control port of said spool valve, said first piston part and said second piston part are jointly or collectively actuated via the same control signal received on said control port by exerting a force on said first piston part and said second piston part, said force being dependent on said control signal. Thus, the control signal is converted into a force, e.g., by a pneumatic or electronic actuator, simultaneously acting on both piston parts.

This can be accomplished in several ways:
According to one embodiment, said pneumatically received control signal is effective inside at least one control chamber (pneumatic actuator) of said spool valve, said at least one control chamber being in cooperation with said first piston part and said second piston part such that said first piston part and said second piston part are jointly or collectively actuated via the same pneumatic control signal received on the control port. Thus, the control signal is pneumatically acting on the respective piston part. Thereby, said first piston part and said second piston part may be joint together or cooperating with each other, e.g., by means of glueing, welding, joining with thread, screwing, unconnectedly touching each other, such that on moving one piston part by the control signal is automatically leading to a movement of the other piston part. Alternatively, each of the piston parts is cooperating with a different control chamber with the same control signal being effective in each of said different control chambers, wherein the piston parts are separated from each other.

According to a further embodiment, said first piston part and said second piston part are each spring-preloaded (e.g., in said first switching position) by at least one spring acting on at least one of the piston parts being in cooperation with each other or on both piston parts directly and forcing said first piston part and said second piston part into an initial position. This allows for a fallback in case of a signal failure.

According to a further embodiment,
- in said first switching position of said spool valve or in a first operation mode of said twin chamber air dryer a first cartridge outlet of said first desiccant cartridge being operated in drying mode is connected to said air outlet via a double check valve and a second cartridge outlet of said second desiccant cartridge is connected to said first cartridge outlet of said first desiccant cartridge via a throttle bypass for providing a purging air stream to said second desiccant cartridge being operated in regeneration mode, and
- in said second switching position of said spool valve or in a second operation mode of said twin chamber air dryer said second cartridge outlet of said second desiccant cartridge being operated in drying mode is connected to said air outlet via said double check valve and said first cartridge outlet of said first desiccant cartridge is connected to said second cartridge outlet of said second desiccant cartridge via said throttle bypass for providing a purging air stream to said first desiccant cartridge being operated in regeneration mode. Consequently, a purging air stream can be provided in an easy way out of the already dried air.

According to a further embodiment, the control unit of the electropneumatic system comprises a monitoring algorithm, e.g., as a software implemented on the control unit, adapted to
- identify the switching position of the spool valve or the operation mode of the twin chamber air dryer;
- determine an actual system pressure value characterizing a system pressure that is effective at the first air outlet leading to the consumer circuits, in particular via a pressure sensor located in an air outlet line leading to the first air outlet;
- determine (read in or calculate) a target system pressure value that is expected to be reached by the actual system pressure value in the identified switching position of the spool valve or in the identified operation mode of the twin chamber air dryer, wherein a target system pressure value is associated with every switching position of the spool valve or with every operation mode of the twin chamber air dryer;
- check or specify if the determined actual system pressure value is approaching or is equal to the determined target system pressure value for the identified switching position of the spool valve or for the identified operation mode of the twin chamber air dryer within a predetermined tolerance, wherein this check is done repeatedly, in particular for verifying if the behavior of the system pressure has changed; and
- generate a failure signal for the identified switching position of the spool valve or for the identified operation mode of the twin chamber air dryer if the determined actual system pressure value deviates from the determined target system pressure value by more than the predetermined tolerance;
wherein the control unit is adapted to switch the operation mode of the twin chamber air dryer (directly or indirectly via the (pneumatic/electric) control signal) in dependence of the generated failure signal.

Thus a method for operating the electropneumatic system is provided comprising the steps of
- identifying the switching position of the spool valve or the operation mode of the twin chamber air dryer;
- determining an actual system pressure value characterizing a system pressure that is effective at the first air outlet leading to the consumer circuits;
- determining a target system pressure value that is expected to be reached by the actual system pressure value in the identified switching position of the spool valve or in the identified operation mode of the twin chamber air dryer;
- checking if the determined actual system pressure value is approaching or is equal to the determined target system pressure value for the identified switching position of the spool valve or for the identified operation mode of the twin chamber air dryer within a predetermined tolerance;
- generating a failure signal for the identified switching position of the spool valve or for the identified operation mode of the twin chamber air dryer if the determined actual system pressure value deviates from the determined target system pressure value by more than the predetermined tolerance; and
- switching the operation mode of the twin chamber air dryer in dependence of the generated failure signal, wherein this includes preventing to use or select the switching position of the spool valve or the operation mode of the twin chamber air dryer that is assigned with the generated failure signal.

Consequently, a failure detection can be provided by comparing the expected behavior of the system pressure linked or assigned to the respective switching position of the spool valve and the actual system behavior. In this way, issues or an improper or abnormal switching behavior of the spool valve can be detected. This failure detection mode can be repeatedly carried out, for ensuring a secure operation of the inventive twin chamber air dryer.

### Brief description of the drawings

The invention is hereinafter described in detail with reference to the accompanying drawings, wherein
- Fig. 1: is a schematical sideview of a twin chamber air dryer;
- Fig. 2: is a pneumatic scheme of the twin chamber air dryer shown in Fig. 1 having a spool valve;
- Fig. 3A, 3B, 3C: are views of the twin chamber air dryer operated in a first operation mode, having a spool valve according to a first embodiment of the invention;
- Fig. 4A, 4B, 4C: are views of the twin chamber air dryer operated in a second operation mode, having the spool valve according to the first embodiment of the invention;
- Fig. 5A, 5B, 5C: are schematical views of further embodiments of the spool valve of the twin chamber air dryer shown in Fig. 1 and Fig. 2;
- Fig. 6: is a flow chart showing a failure detection mode.

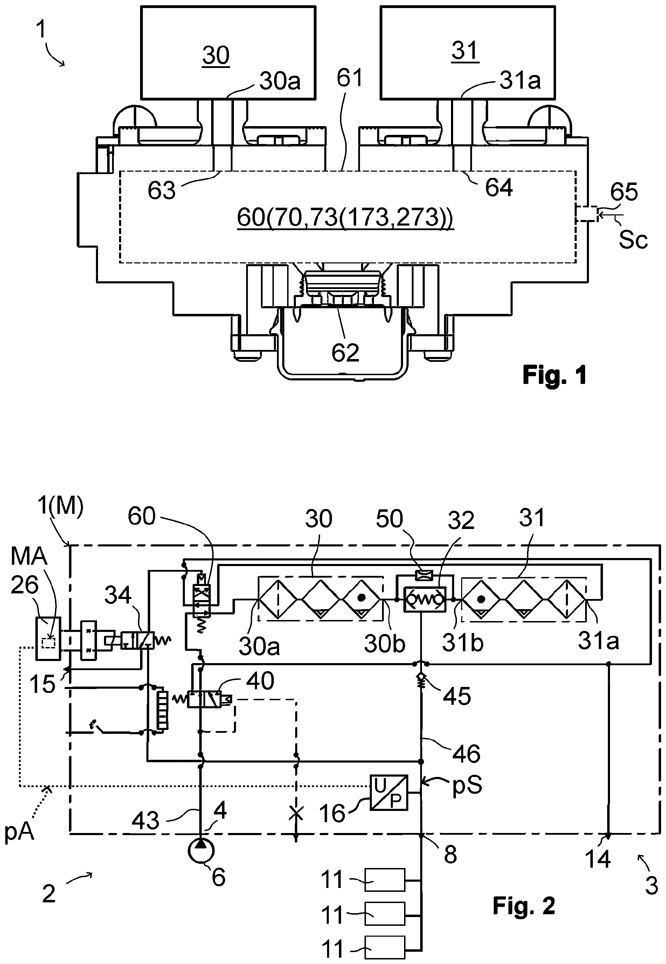

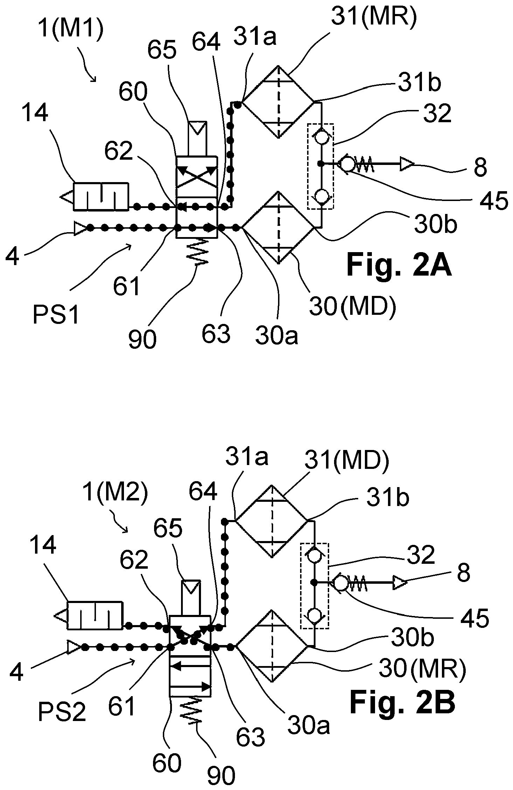

Fig. 1 shows a schematical sideview of a twin chamber air dryer 1 according to an embodiment of the invention. The twin chamber air dryer 1 is provided in a commercial vehicle 2 as part of an electropneumatic system 3, as also shown in the pneumatic scheme of Fig. 2. The electropneumatic system 3 comprises a compressor 6 connected to an air inlet 4 of the twin chamber air dryer 1. The twin chamber air dryer 1 is able to dry and filter the compressed air delivered from the compressor 6 to the air inlet 4 using desiccant cartridges 30, 31, each comprising moisture adsorbing materials, e. g. granulates. In drying mode MD, the compressed air can be guided through the respective desiccant cartridge 30, 31, wherein the dried and filtered compressed air is then supplied to consumer circuits 11 via a first air outlet 8. The consumer circuits 11 include, by way of example, pneumatic brake circuits and air suspension systems or the like. In addition, the respective desiccant cartridges 30, 31 can be regenerated or purged in a regeneration mode MR, in which air flows in the reverse direction through the respective desiccant cartridge 30, 31 to a first venting outlet 14.

To provide a continuous flow of compressed air from the compressor 6 to the consumer circuits 11 and at the same time ensure that a continuous regeneration of the desiccant cartridges 30, 31 can take place, such a twin chamber air dryer 1 having a first desiccant cartridge 30 and a second desiccant cartridge 31 can be operated in alternating operation modes M, i.e., in a first operation mode M1 and a second operation mode M2 (or first and second operation phase). Thereby, a control unit 26 is able to switch the twin chamber air dryer 1 between these two operation modes M; M1, M2, said control unit 26 being arranged external or internal.

In the first operation mode M1, the compressed air coming from the air inlet 4 is delivered to a first cartridge inlet 30a of the first desiccant cartridge 30, is flowing through the first desiccant cartridge 30, where it is dried, and the dried compressed air is then delivered from a first cartridge outlet 30b to a double check valve 32, which forwards the dried compressed air via an additional check valve 45 and an air outlet line 46 to the first air outlet 8. Thus, in the first operation mode M1 the first desiccant cartridge 30 is operated in drying mode MD. In this first operation mode M1, the second desiccant cartridge 31 is purged by a steady flow of compressed air flowing in the reverse direction, i.e., the second desiccant cartridge 31 is operated in regeneration mode MR. Therefore, a second cartridge inlet 31a of the second cartridge 31 is connected to the first venting outlet 14 and a second cartridge outlet 31b of the second cartridge 31 is connected to the double check valve 32.

An additional throttle bypass 50 of the double check valve 32 connects the two cartridge outlets 30b and 31b. This allows a small purging air stream to flow from the cartridge outlet 30b or 31b of the respective cartridge 30, 31 operated in drying mode MD to the outlet 31b or 30b of the respective cartridge 31, 30 operated in regeneration mode MR. Thus, the purging air stream can flow through the desiccant cartridge 31 or 30 operated in regeneration mode MR and can be delivered to the first venting outlet 14.

In the second operation mode M2, the air flow is reversed, i.e., the compressed air coming from the air inlet 4 is delivered to the second cartridge inlet 31a of the second desiccant cartridge 31, is flowing through the second desiccant cartridge 31, where it is dried, and the dried compressed air is then delivered from the second cartridge outlet 31b to the double check valve 32, which forwards the dried compressed air via the additional check valve 45 and the air outlet line 46 to the first air outlet 8. Thus, in the second operation mode M2 the second desiccant cartridge 31 is operated in drying mode MD. In this second operation mode M2, the first desiccant cartridge 30 is purged by a steady flow of compressed air flowing in the reverse direction, i.e., the first desiccant cartridge 30 is operated in regeneration mode MR. Therefore, the first cartridge inlet 30a of the first cartridge 30 is connected to the first venting outlet 14 and the first cartridge outlet 30b of the first cartridge 30 is connected to the double check valve 32 and to the second cartridge outlet 31b via the throttle bypass 50.

In order to switch between both operation modes M; M1, M2 a spool valve 60 is used, as depicted in Fig. 1 and 2. The spool valve 60 is in particular designed as a 4/2 spool valve, comprising
- a spool valve inlet port 61 connected to the air inlet 4 via an air supply line 43 having an additional spring-loaded pneumatically controlled 3/2-operating valve 40 that remains in its open basic position such that compressed air is provided to the first spool valve inlet port 61 ;
- a spool valve outlet port 62 connected to the first venting outlet 14;
- a first spool valve exchange port 63 connected to the first cartridge inlet 30a of the first desiccant cartridge 30;
- a second spool valve exchange port 64 connected to the second cartridge inlet 31a of the second desiccant cartridge 31; and
- a control port 65 connected to an electropneumatic control valve 34, e.g., a spring preloaded 3/2 solenoid valve, being in electronic connection with the control unit 26.

As shown in Fig. 2 or 2A, in the first operation mode M1 of the twin chamber air dryer 1 the control valve 34 is switched into a first control position PC1 or released position (biased 3/2 solenoid valve) via the control unit 26 connecting the control port 65 of the spool valve 60 to a second venting outlet 15. Consequently, the spool valve 60 is switched by the force provided by spring 90 into (or left) in a first switching position PS1, in which
- the spool valve inlet port 61 is connected to the first spool valve exchange port 63 and
- the spool valve outlet port 62 is connected to the second spool valve exchange port 64.

This first switching position PS1 of the spool valve 60 causes the compressed air being delivered to the spool valve inlet port 61 via the air supply line 43 to flow into the first desiccant cartridge 30 via the first cartridge inlet 30a, thus, operating the first desiccant cartridge 30 in drying mode MD. The dried compressed air provided at the first cartridge outlet 30b is then flowing to the double check valve 32 as well as to the second cartridge outlet 31b (as a purging air stream) via the throttle bypass 50. After purging and de-moisturizing the second desiccant cartridge 31 the purging air stream is delivered to the second spool valve exchange port 64 via the second cartridge inlet 31a. After passing the spool valve 60 in its first switching position PS1 the purging air stream is delivered to the first venting outlet 14 connected to the spool valve outlet port 62. Thus, the second desiccant cartridge 31 is operated in regenerating mode MR. In case the solenoid control valve 34 is not switched on (switched into the first control position PC1) by the control unit 26 (either intentionally or due to a malfunction), the spring 90 of the spool valve 60 automatically forces the system to be operated in this first operation mode M1.

As shown in Fig. 2B, in the second operation mode M2 of the twin chamber air dryer 1 the control valve 34 is switched into a second control position PC2 or actuated position via the control unit 26 connecting the control port 65 of the spool valve 60 to the air outlet line 46, thereby switching the spool valve 60 (against the spring force of the spring 90) into a second switching position PS2, in which
- the spool valve inlet port 61 is connected to the second spool valve exchange port 64 and
- the spool valve outlet port 62 is connected to the first spool valve exchange port 63.

This second switching position PS2 of the spool valve 60 causes the compressed air being delivered to the spool valve inlet port 61 via the air supply line 43 to flow into the second desiccant cartridge 31 via the second cartridge inlet 31a, thus, operating the second desiccant cartridge 31 in drying mode MD. The dried compressed air provided at the second cartridge outlet 31b is then flowing to the double check valve 32 as well as to the first cartridge outlet 30b (as a purging air stream) via the throttle bypass 50. After purging and de-moisturizing the first desiccant cartridge 30 the purging air stream is delivered to the first spool valve exchange port 63 via the first cartridge inlet 30a. After passing the spool valve 60 in its second switching position PS2 the purging air stream is delivered to the first venting outlet 14 connected to the spool valve outlet port 62. Thus, the first desiccant cartridge 30 is operated in regenerating mode MR.

In this way a continuous flow of compressed air from the compressor 6 to the consumer circuits 11 is provided at the same time ensuring that a continuous regeneration of both desiccant cartridges 30, 31 can take place.

The control signal Sc supplied to the (pneumatic) control port 65 of the spool valve 60 for switching the spool valve 60 between the first and second switching position PS1, PS2, is described as a pneumatic signal above (supplied by the electropneumatic control valve 34). However, in an alternative embodiment the control signal Sc might be an electric signal submitted to the (electronic) control port 65, in particular, outputted directly by the control unit 26. Further, the control unit 26 for controlling the (electropneumatic) control valve 34 outputting the pneumatic control signal Sc or for providing the electric control signal Sc in order to selectively switch between the operation modes M; M1, M2 might be arranged internally at the twin chamber air dryer 1 or externally.

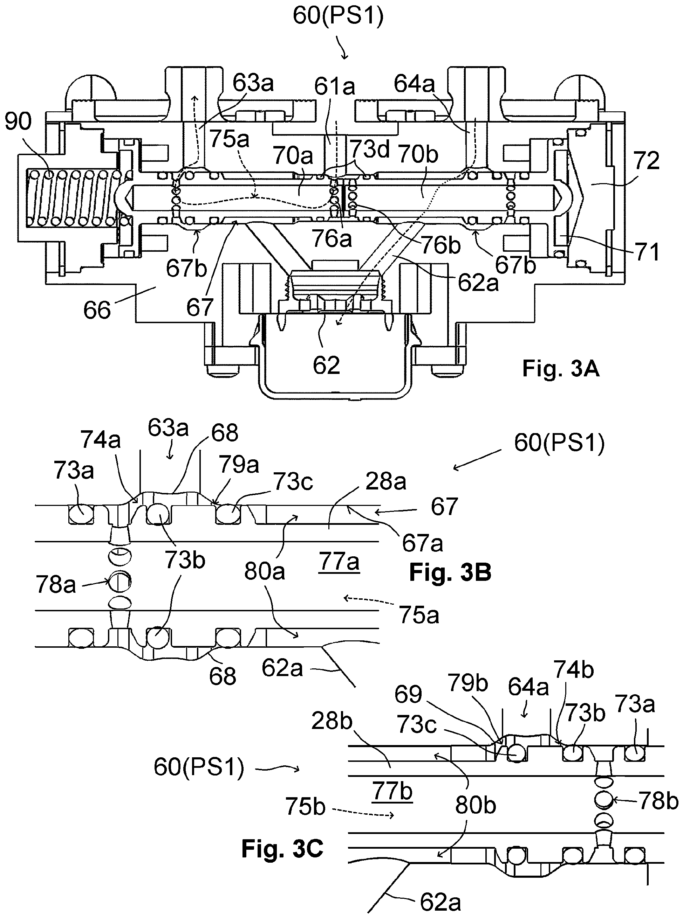

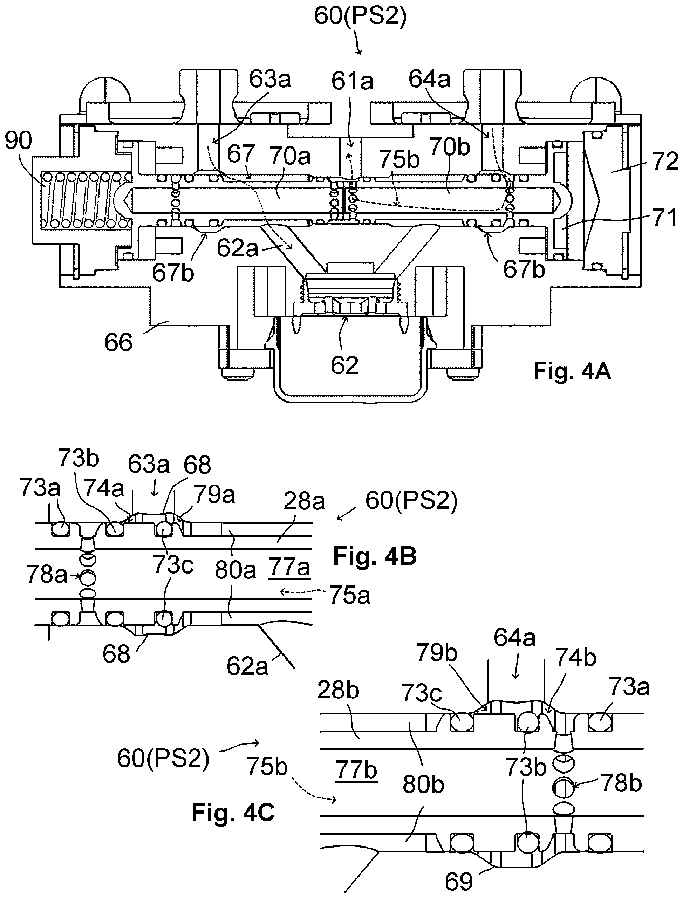

An exemplary embodiment of such a spool valve 60 is shown in Figs. 3A, 3B, 3C, 4A, 4B, 4C wherein the switching operation described above is accomplished in the following manner:
The spool valve 60 comprises a spool valve casing 66 with different air channels 61a, 62a, 63a, 64a assigned to the individual ports 61, 62, 63, 64 described above. The air channels 61a, 62a, 63a, 64a are connected to each other via a centrally located valve chamber 67 having a substantially cylindrical contoured interior wall 67a. The contour of the interior wall 67a transitions into at least two spaced apart undercuts 68, 69 via chamfers, respectively, wherein each of the undercuts 68, 69 and chamfers are running fully circumferential on the interior wall 67a. In the shown embodiment the undercuts 68, 69 are in alignment with the first and second spool valve exchange channels 63a, 64a, respectively, for exchanging air between the valve chamber 67 and the respective desiccant cartridge 30, 31 via the first and second spool valve exchange ports 63, 64, respectively.

The air flow directed through the respective air channels 61a, 62a, 63a, 64a or the individual ports 61, 62, 63, 64 is controlled by a piston means 70 that, in this embodiment, is formed of a piston couple, i.e., a first piston part 70a and a second piston part 70b, each located inside the cylindrical valve chamber 67 and running coaxially to each other. Thereby, each piston part 70a, 70b is assigned to one of the desiccant cartridges 30, 31 or spool valve exchange channels 63a, 64a, respectively. The first piston part 70a and the second piston part 70b might be connected to each other, e.g., by means of glueing, welding, joining with thread (included in the piston parts 70a, 70b) or by screwing, or separated from each other, i.e., unconnectedly touching each other via their end faces. Thus, in this embodiment, both piston parts 70a, 70b are directly interacting with each other, such that the piston parts 70a, 70b can be simultaneously shifted or relocated inside the valve chamber 67, in dependence of the control signal Sc, which is pneumatic in this embodiment.

According to this embodiment, the pneumatic control signal Sc is effective inside a control chamber 71 defined by a cover 72 located on the spool valve 60 and the piston means 70, e.g., the second piston part 70b. Therefore, the control port 65 is connected to the control chamber 71 via a main control channel 65a inside the spool valve casing 66 allowing the pneumatic control signal Sc to flow to the control chamber 71. Consequently, on supplying a certain control pressure over the control signal Sc a force is exerted on the second piston part 70b of the piston means 70, wherein the first piston part 70a is also affected due to the direct interconnection. Thus, both piston parts 70a, 70b are relocated simultaneously in dependence of the pneumatic control signal Sc. In addition, the piston means 70 is spring preloaded by a spring 90 acting on the first piston part 70a. Thereby, the force exerted on the second piston part 70b in dependence on the control signal Sc is tensioning the spring 90, leading to a return of the spring 90 and the piston means 70 (first and second piston part 70a, 70b) into its initial position if the force exerted on the second piston part 70b is reduced or is no longer existent.

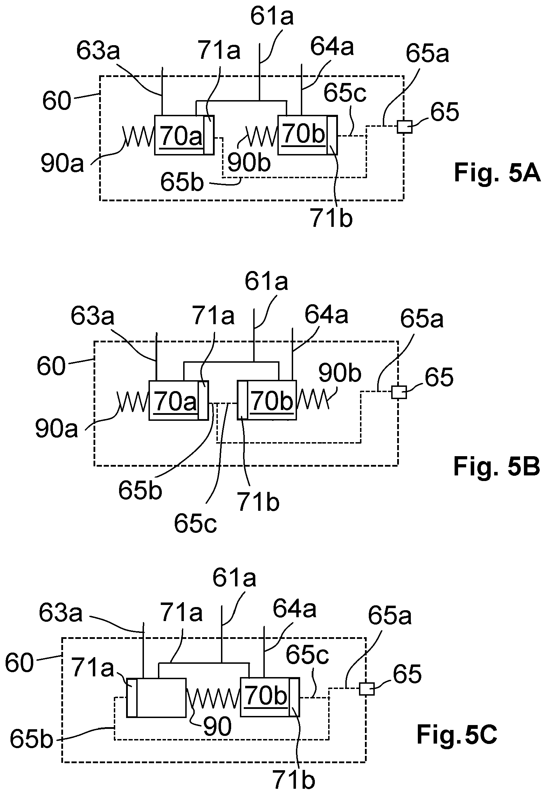

According to another embodiment, schematically shown in Figs. 5A, 5B, 5C, the pneumatic control signal Sc is acting on the respective piston parts 70a, 70b separately, e.g., via a first splitted control channel 65b and a second splitted control channel 65c originating from the main control channel 65a or the control port 65. In these embodiments, the same pneumatic control signal Sc is delivered to separated control chambers 71a, 71b acting on the respective piston part 70a, 70b. This also leads to a simultaneous relocating of the individual spring preloaded piston parts 70a, 70b when a certain pneumatic control signal Sc is provided.

A spring preloading can be achieved by a first spring 90a acting solely on the first piston part 70a and a second spring 90b solely acting on the second piston part 70b, as shown in Fig. 5A, 5B. Alternatively, as shown in Fig. 5C, a single spring 90 located between both piston parts 70a, 70b can be used, thus, acting on both piston parts 70a, 70b simultaneously.

In case the control signal Sc is electric, the respective control chamber 71; 71a, 71b is replaced by a control actuator, e.g., servomotor, acting directly on the respective spring preloaded piston part 70a, 70b, for providing a simultaneous relocation of both piston parts 70a, 70b. Thus, the piston means 70, i.e., the first piston part 70a and the second piston part 70b, can be controlled pneumatically as well as electronically in the same manner via the respective control means, e.g., the control chamber 71; 71a, 71b or the control actuator.

In addition, in all of the embodiments described above, the respective spring 90; 90a, 90b for spring preloading the respective piston part 70a, 70b can also be replaced by other means, e.g., applying a pneumatic pressure, providing the same effect of returning the piston means 70 (first and second piston part 70a, 70b) into its initial position if the force exerted in dependence of the control signal Sc is reduced or is no longer existent.

The switching position PS1, PS2 of the spool valve 60 described above in respect to Figs. 2, 2A, 2B is determined by the position of the respective piston parts 70a, 70b. Thereby, the position of the respective piston part 70a, 70b specifies if the desiccant cartridge 30, 31 which is assigned to this respective piston part 70a, 70b is operated in regeneration mode MR or in drying mode MD, wherein each desiccant cartridge 30, 31 is operated in a different mode MR, MD. As the piston parts 70a, 70b are simultaneously moved on a modified control signal Sc, switching between the regeneration mode MR and the drying mode MD (or vice versa) is carried out simultaneously for each desiccant cartridge 30, 31, such that both desiccant cartridges 30, 31 are constantly operated in different modes MR, MD.

Setting the regeneration mode MR or the drying mode MD for a certain desiccant cartridge 30, 31 is accomplished by selectively opening and closing or activating and deactivating air flow passages via the respective piston part 70a, 70b
- for allowing compressed air to be supplied to the respective desiccant cartridge 30, 31, which is operated in drying mode MD, or
- for allowing purging air coming from the respective desiccant cartridge 30, 31, which is operated in regeneration mode MR, to be exhausted via the first venting outlet 14.

As described hereinafter in more detail, the respective air flow passages are opened and closed through an interaction of sealing members 73 positioned on or being bound to the moveable piston parts 70a, 70b, respectively, and a specially formed contour 67b of the interior wall 67a of the valve chamber 67 having the undercuts 68, 69 already described above.

As can be seen from Fig. 3A, 3B and 3C, in the (spring released) first switching position PS1 of the spool valve 60 no control pressure is supplied to the control chamber 71 via the control signal Sc and therefore, the piston means 70, i.e., the first piston part 70a and the second piston part 70b, is switched into its initial position by the spring preloading. According to Fig. 3A and 3B, in this initial position of the first piston part 70a a first supply passage 74a is in its open state, wherein the first supply passage 74a connects the first spool valve exchange channel 63a leading to the first cartridge inlet 30a to a first supply channel 75a located inside the first piston part 70a. The first supply channel 75a in turn is flow-connected to the spool valve inlet channel 61a through which the compressed air is provided.

In the shown embodiment, the first supply channel 75a is formed by the first piston part 70a being hollow, allowing compressed air to flow from the spool valve inlet channel 61a through one or more first inlet openings 76a formed in a first outer wall 28a of the first piston part 70a into a first interior 77a of the first piston part 70a. In further embodiments, the first supply channel 75a may be construed different, i.e., being attached to or integrated into the first piston part 70a in a different way. Through one or more first outlet openings 78a, the air can be guided to the first supply passage 74a and, in its open position, to the first spool valve exchange channel 63a.

In order to keep the compressed air inside this first supply channel 75a, the first inlet opening(s) 76a and the first outlet opening(s) 78a are each positioned between sealing members 73; 73a, 73b, 73c which are each formed as o-rings 173 according to the shown embodiment. The sealing members 73; 73a, 73b, 73c are running fully circumferential on the first piston part 70a, e.g., in a ring groove in case of o-rings 173, and are arranged adjacent to the first inlet opening 76a and the first outlet opening 78a, respectively, in such a way that, depending on the location of the first piston part 70a inside the valve chamber 67, they can touch the interior wall 67a to create a gas-tight sealing.

Thereby, the sealing members 73; 73a, 73b, 73c being formed as o-rings 173 may each have a circular cross-section and a circular shape, the shape being adapted to the shape of the first piston part 70a. However, depending on the application and construction of the elements of the spool valve 60, i.e., the first piston part 70a, the sealing members 73; 73a, 73b, 73c may alternatively be formed as gaskets 273 having a non-circular cross-section and/or a non-circular shape, also allowing to keep the compressed air inside the first supply channel 75a. Further, instead of formfitting the sealing members 73 (as o-rings 173, gaskets 273 or in other shape) inside ring grooves on the first piston part 70a, they can alternatively be directly bound or materially bonded to the first piston part 70a during manufacturing.

According to Fig. 3A and 3B, in the first switching position PS1 of the spool valve 60 or the initial position, forced by the spring 90, of the first piston part 70a, a first outer sealing member 73a (formed as an o-ring 173 in the shown embodiment) on the first piston part 70a is compressed while touching the interior wall 67a, providing a gas-tight sealing effect. An intermediate sealing member 73b (formed as an o-ring 173 in the shown embodiment) on the first piston part 70a is positioned in the region of the first undercut 68 formed in the interior wall 67a. As the diameter of the interior wall 67a is enlarged in the region of the first undercut 68, the intermediate sealing member 73b is uncompressed and is not touching the interior wall 67a, providing no gas-tight sealing effect. Consequently, the first supply passage 74a is opened and the first outlet opening 78a of the first supply channel 75a is connected to the first spool valve exchange channel 63a leading to the first cartridge inlet 30a, allowing compressed air to flow to the first desiccant cartridge 30, being operated in drying mode MD.

In addition, a second outer sealing member 73c (formed as an o-ring 173 in the shown embodiment) on the first piston part 70a being spaced apart from the first undercut 68 in the first switching position PS1 of the spool valve 60 is also compressed while touching the interior wall 67a, thus, also providing a gas-tight sealing effect. This prevents the compressed air to flow through a first exhaust passage 79a, which is closed in this first switching position PS1 of the spool valve 60. The first exhaust passage 79a, in its open position (see Fig. 4A, 4B, 4C), connects the first spool valve exchange channel 63a leading to the first cartridge inlet 30a to a first exhaust channel 80a leading to the spool valve outlet channel 62a and the spool valve outlet port 62, the first exhaust channel 80a being separated from the first supply channel 75a.

Thereby, the first exhaust channel 80a is formed between a first outer wall 28a of the first piston part 70a and the interior wall 67a of the valve chamber 67, the first exhaust channel 80a being restricted by the second outer sealing member 73c and an inlet sealing member 73d (formed as an o-ring 173 in the shown embodiment) sealing in particular the first inlet opening 76a. Thus, the location of the respective sealing members 73; 73a, 73b, 73c, 73d (formed as o-rings 173, gaskets 273 or in other shape) always prevents the first exhaust channel 80a to be gas-conductingly connected to the first supply channel 75a, i.e., the first exhaust passage 79a and the first supply passage 74a cannot be opened simultaneously.

According to Fig. 3A and 3C, a similar setup is used for the second piston part 70b, with the difference that the second desiccant cartridge 31 should be operated in regeneration mode MR, which is accomplished in the following:
In the first switching position PS1 of the spool valve 60 or the initial position of the second piston part 70b a second supply passage 74b is in its closed state, wherein the second supply passage 74b connects the second spool valve exchange channel 64a leading to the second cartridge inlet 31a to a second supply channel 75b located inside the second piston part 70b. The second supply channel 75b in turn is flow-connected to the spool valve inlet channel 61a through which the compressed air is provided.

In the shown embodiment, the second supply channel 75b is also formed by the second piston part 70b being hollow, allowing compressed air to flow from the spool valve inlet channel 61a through one or more second inlet openings 76b formed in the second outer wall 28b of the second piston part 70b into a second interior 77b of the second piston part 70b. Through one or more second outlet openings 78b, the air can be guided to the second supply passage 74b and, in its open position, to the second spool valve exchange channel 64a. In the closed position, as shown in Fig. 3C, the compressed air is retained, preventing it to reach the second desiccant cartridge 31. In order to keep the compressed air inside this second supply channel 75b, the second inlet opening(s) 76b and the second outlet opening(s) 78b are each positioned between sealing member 73; 73a, 73b, 73c (formed as o-rings 173, gaskets 273 or in other shape, as described in respect to the first piston part 70a). In further embodiments, the second supply channel 75b may be construed different, i.e., being attached to or integrated into the second piston part 70b in a different way.

The sealing members 73; 73a, 73b, 73c are running fully circumferential on the second piston part 70b, e.g., in a ring groove in case of o-rings 173, and are arranged adjacent to the second inlet opening 76b and the second outlet opening 78b, respectively, in such a way that, depending on the location of the second piston part 70b inside the valve chamber 67, they can touch the interior wall 67a to create a gas-tight sealing. Like described in respect to the first supply channel 75a, depending on the application and construction of the elements of the spool valve 60 sealing members 73; 73a, 73b, 73c might be used having circular (o-ring 173) or non-circular cross-sections and/or non-circular shapes (gaskets 273), allowing to keep the compressed air inside the second supply channel 75b. Further, the respective sealing member 73 might be form-fitted inside ring grooves on the first piston part 70a or they might alternatively be directly bound or materially bonded to the second piston part 70b during manufacturing.

According to Fig. 3A and 3C, in the first switching position PS1 of the spool valve 60 or the initial position of the second piston part 70b, forced by the spring 90, a first outer sealing member 73a (formed as an o-ring 173 in the shown embodiment) on the second piston part 70b is compressed while touching the interior wall 67a, providing a gas-tight sealing effect. An intermediate sealing member 73b (formed as an o-ring 173 in the shown embodiment) on the second piston part 70b is also compressed while touching the interior wall 67a, providing a gas-tight sealing effect. Consequently, the second supply passage 74b is closed and the second outlet opening 78b of the second supply channel 75b is not connected to the second spool valve exchange channel 64a leading to the second cartridge inlet 31a, preventing compressed air to flow to the second desiccant cartridge 31, being operated in regeneration mode MR.

However, the second outer sealing member 73c (formed as an o-ring 173 in the shown embodiment) on the second piston part 70b is positioned in the region of the second undercut 69 formed in the interior wall 67a in this first switching position PS1 of the spool valve 60. As the diameter of the interior wall 67a is enlarged in the region of the second undercut 69, the second outer sealing member 73c on the second piston part 70b is uncompressed and is not touching the interior wall 67a, providing no gas-tight sealing effect. Consequently, a second exhaust passage 79b is opened allowing purged air coming from the second desiccant cartridge 31 through the second spool valve exchange channel 64a to flow into the second exhaust channel 80b leading to the spool valve outlet channel 62a and the spool valve outlet port 62, the second exhaust channel 80b being separated from the second supply channel 75b.

Thereby, the second exhaust channel 80b is formed between the second outer wall 28b of the second piston part 70b and the interior wall 67a of the valve chamber 67, the second exhaust channel 80b being restricted by the second outer sealing member 73c and the inlet sealing member 73d (formed as an o-ring 173 in the shown embodiment) sealing in particular the second inlet opening 76b. Thus, the location of the sealing members 73a, 73b, 73c, 73d (formed as o-rings 173, gaskets 273 or in other shape) always prevents the second exhaust channel 80b to be gas-conductingly connected to the second supply channel 75b, i.e., the second exhaust passage 79b and the second supply passage 74b cannot be opened simultaneously.

Summarizing, in the (spring released) first switching position PS1 of the spool valve 60, the respective sealing members 73; 73a, 73b, 73c, 73d (formed as o-rings 173, gaskets 273 or in other shape) on both piston parts 70a, 70b are positioned in such a way that the first exhaust passage 79a and the second supply passage 74b are closed and the first supply passage 74a and the second exhaust passage 79b are opened, allowing the first desiccant cartridge 30 to be dried and the second desiccant cartridge 31 to be purged or regenerated. Switching the spool valve 60 into its (spring forced) second switching position PS2, i.e., an appropriate pneumatic control signal Sc is effective inside the control chamber 71, relocates both piston parts 70a, 70b inside the valve chamber 67 against the spring force, as can be seen from Figs. 4A, 4B, 4C, leading to reversing air streams inside the twin chamber air dryer 1.

Relocation of the piston parts 70a, 70b inside the valve chamber 67 also leads to a repositioning of the sealing members 73; 73a, 73b, 73c, 73d in relation to the interior wall 67a, in particular, in relation to the first and second undercuts 68, 69 formed therein. Thereby, the sealing members 73; 73a, 73b, 73c, 73d slide along the special contour 67b of the interior wall 67a. As can be seen from Fig. 4A and 4B, the first piston part 70a is repositioned in such a way that the first outer sealing member 73a on the first piston part 70a is still compressed while touching the interior wall 67a, providing a gas-tight sealing effect. In the second switching position PS2 the intermediate sealing member 73b on the first piston part 70a is compressed while touching the interior wall 67a, providing a gas-tight sealing effect, and the second outer sealing member 73c on the first piston part 70a is uncompressed and is not touching the interior wall 67a, providing no gas-tight sealing effect.

Thus, in relation to the first switching position PS1, the intermediate sealing 73b and the second outer sealing member 73c on the second piston part 70b, respectively, have changed its compression states during sliding along the interior wall 67a and the first supply passage 74a and the first exhaust passage 79a have changed its opening/closing or activation/deactivation states. Consequently,
- the closed first supply passage 74a prevents compressed air from being delivered from the spool valve inlet channel 61a and through the first supply channel 75a to the first spool valve exchange channel 63a and the first desiccant cartridge 30, and
- the opened first exhaust passage 79a permits purging gas from flowing out of the first desiccant cartridge 30 through the first spool valve exchange channel 63a into the first exhaust channel 80a and the spool valve outlet channel 62a. Thus, drying mode MD and regeneration mode MR have been exchanged for the first desiccant cartridge 30.

Further, as can be seen from Fig. 4A and 4C, the second piston part 70b is relocated in such a way that the first outer sealing member 73a on the second piston part 70b is still compressed while touching the interior wall 67a, providing a gas-tight sealing effect. In the second switching position PS2 the intermediate sealing member 73b on the second piston part 70b is uncompressed and is not touching the interior wall 67a, providing no gas-tight sealing effect, and the second outer sealing member 73c on the second piston part 70b is compressed while touching the interior wall 67a, providing a gas-tight sealing effect. Thus, in relation to the first switching position PS1, the intermediate sealing member 73b and the second outer sealing member 73c on the second piston part 70b, respectively, have changed its compression states during sliding along the interior wall 67a and the second supply passage 74b and the second exhaust passage 79b have changed its opening/closing or activation/deactivation states. Consequently,
- the opened second supply passage 74b permits compressed air from being delivered from the spool valve inlet channel 61a and through the second supply channel 75b to the second spool valve exchange channel 64a and to the second desiccant cartridge 31, and
- the closed second exhaust passage 79b prevents purging gas from flowing out of the second desiccant cartridge 31 through the second spool valve exchange channel 64a into the second exhaust channel 80b and the spool valve outlet channel 62a. Thus, regeneration mode MR and drying mode MD have been exchanged for the second desiccant cartridge 31.

The same described effect of opening and closing the exhaust passages 79a, 79b and simultaneously closing and opening the supply passages 74a, 74b assigned to the respective piston parts 70a, 70b can also be achieved for the alternative embodiments of the piston parts 70a, 70b shown in Fig. 5A, 5B, 5C. In contrast to the embodiment described in relation to Figs 3A, 3B, 3C, 4A, 4B, 4C, the piston parts 70a, 70b shown in Fig. 5A, 5B, 5C are not pushing against each other in order to provide a synchronous movement of both piston parts 70a, 70b if a certain (pneumatic or electric) control signal Sc is supplied. Instead, the same (pneumatic or electric) control signal Sc is supplied to both piston parts 70a, 70b separately but simultaneously, also leading to a synchronous movement (via pneumatic or electric actuator) of both piston parts 70a, 70b.

For example, the control signal Sc is supplied to the first piston part 70a via the first splitted control channel 65b and simultaneously to the second piston part 70b via the second splitted control channel 65c leading to a synchronous movement of both piston parts 70a, 70b, as schematically shown in Figs. 5A, 5B, 5C. In the first switching position PS1 the compressed air provided via the spool valve inlet channel 61a is delivered to the first supply channel 75a and into the first spool valve exchange channel 63a via the opened first supply passage 74a, while the first exhaust passage 79a is closed. Further, the gauging air provided through the second spool valve exchange channel 64a is delivered to the second exhaust channel 80b via the opened second exhaust passage 79b, while the second supply passage 74b is closed. Switching the spool valve 60 into the second switching position PS2 changes the opening and closing states of the respective exhaust passages 79a, 79b and supply passages 74a, 74b in a simultaneous way as already described above.

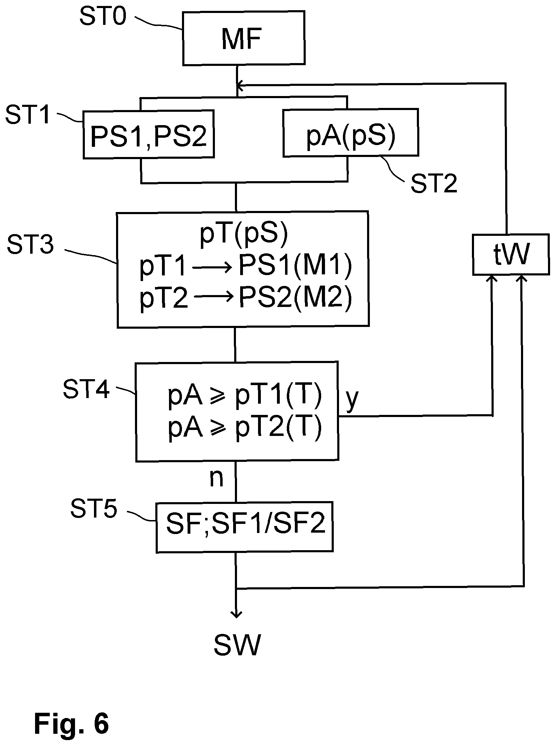

In any of the embodiments described above, the twin chamber air dryer 1 can be operated in a failure detection mode MF, exemplary illustrated in a flow chart in Fig. 6, that may be active continuously or only temporary at predetermined times. In case the failure detection mode MF is active, an improper or abnormal switching behavior of the spool valve 60 can be detected, if such issues in the switching behavior prevents that (enough) compressed air is provided for the consumer circuits 11 via the air outlet line 46 and the first air outlet 8.

Therefore, the control unit 26 comprises a monitoring algorithm MA, e.g., as part of the software running on the control unit 26. The monitoring algorithm MA is adapted to identify the switching position PS1, PS2 of the spool valve 60, e.g., based on the control position PC1, PC2 of the control valve 34 that has been set by the control unit 26 (in case the control port 65 of the spool valve 60 is pneumatically controlled) or based on the electronic control signal Sc that has been outputted by the control unit 26 (in case the control port 65 of the spool valve 60 is electrically controlled). As described above, the switching position PS1, PS2 of the spool valve 60 is assigned with the respective operation mode M; M1, M2. Thus, based on the identified switching position PS1, PS2 of the spool valve 60 (or operation mode M; M1, M2) the monitoring algorithm MA can deduce which desiccant cartridge 30, 31 is operated in regeneration mode MR and which desiccant cartridge 30, 31 is operated in drying mode MD.

Further, the monitoring algorithm MA is adapted to monitor a behavior of a system pressure pS that is effective in the air outlet line 46 and/or at the first air outlet 8 leading to the consumer circuits 11. Therefore, a pressure sensor 16 is located in the air outlet line 46 between the double check valve 32 and the first air outlet 8. In alternative embodiments, the pressure sensor 16 may be located between the first air outlet 8 and the consumer circuits 11, e.g., directly behind the air outlet 8, or even behind each of the spool valve exchange ports 63, 64, for determining the behavior of the system pressure pS provided to the consumer circuits 11.

The pressure sensor 16 is signal-conducting connected to the control unit 26 such that the control unit 26 or the monitoring algorithm MA implemented therein can receive and process actual system pressure values pA characterizing the system pressure pS, wherein the actual system pressure values pA are outputted by the pressure sensor 16. The processing may include the monitoring of the actual system pressure values pA over time in order to determine the behavior of the system pressure pS within a given time period. Based thereon, the monitoring algorithm MA is adapted to check if the actual system pressure values pA are fitting to the identified switching position PS1, PS2 of the spool valve 60 (or operation mode M; M1, M2), as shown in Fig. 6:

After initialization and activation of the failure detection mode MF in an initial monitoring step ST0, the monitoring algorithm MA is identifying the switching position PS1, PS2 of the spool valve 60 (or operation mode M; M1, M2 of the twin chamber air dryer 1) in a first monitoring step ST1 and is receiving the actual system pressure values pA in a second monitoring step ST2. The first and the second monitoring steps ST1, ST2 can be carried out successively (also swapped) or they can be carried out simultaneously.

In a third monitoring step ST3, the monitoring algorithm MA determines target system pressure values pT, that are expected to be reached by the actual system pressure values pA for the respective switching position PS1, PS2 of the spool valve 60 (or operation mode M; M1, M2) determined in the first monitoring step ST1. The target system pressure values pT might be read in or loaded from a look-up table stored on the control unit 26 or might be calculated based on current system conditions, e.g., a rotational speed of the compressor 6, consumption of the consumer circuits 11, type of desiccant cartridge 30, 31, etc.). Consequently, the first switching position PS1 might be associated with a first target system pressure value pT1 and the second switching position PS2 might be associated with a second target system pressure value pT2, wherein the second target system pressure value pT2 may differ from the first target system pressure value pT1 depending on the system conditions.

On activation of the failure detection mode MF in the initial monitoring step ST0, the monitoring algorithm MA might identify (in the first monitoring step ST1) that the first switching position PS1 of the spool valve 60 is set, i.e., the first operation mode M1 is active and the first desiccant cartridge 30 is operated in drying mode MD and the second desiccant cartridge 31 is operated in regeneration mode MR. In this configuration it is expected that the actual system pressure value pA equals or is approaching a certain first target system pressure value pT1 that is associated with the first switching position PS1 and that is determined (read in or calculated) by the monitoring algorithm MA in the third monitoring step ST3 in the way described above.

In a fourth monitoring step ST4, the monitoring algorithm MA is then determining if the actual system pressure value pA is approaching or is equal to the expected first target system pressure value pT1 within a predetermined tolerance T, e.g., within a deviation of maximal 10%. In case the actual system pressure value pA deviates from the determined first target system pressure value pT1 by more than the predetermined tolerance T the monitoring algorithm MA is generating a first failure signal SF1 in a fifth monitoring step ST5. In case of matching system pressure values pA, pT1 within the predetermined tolerance T the monitoring algorithm MA is not generating the first failure signal SF1 as the system pressure pS is behaving as expected.

On activation of the failure detection mode MF in the initial monitoring step ST0, the same course of actions applies if the monitoring algorithm MA identifies (in the first monitoring step ST1) that the second switching position PS2 of the spool valve 60 is set, i.e., the second operation mode M2 is active and the first desiccant cartridge 30 is operated in regeneration mode MR and the second desiccant cartridge 31 is operated in drying mode MD. In this configuration it is expected that the actual system pressure value pA equals or is approaching a certain second target system pressure value pT2 that is associated with the second switching position PS2 and that is determined (loaded or calculated) by the monitoring algorithm MA in the third monitoring step ST3 in the way described above.

In the fourth monitoring step ST4, the monitoring algorithm MA is then determining if the actual system pressure value pA is approaching or equal to the expected second target system pressure value pT2 within a predetermined tolerance T, e.g., within a deviation of maximal 10%. In case the actual system pressure value pA deviates from the determined second target system pressure value pT2 by more than the predetermined tolerance T, the monitoring algorithm MA is generating a second failure signal SF2 SF1 in the fifth monitoring step ST5. In case of matching system pressure values pA, pT2 within the predetermined tolerance T the monitoring algorithm MA is not generating the second failure signal SF2 as the system pressure pS is behaving as expected.

Afterwards, the switching position PS1, PS2 of the spool valve 60 (or operation mode M; M1, M2) will be selected by the control unit 26 depending on whether a failure signal SF; SF1, SF2 has been generated by the monitoring algorithm MA or not. Therefore, the control unit 26 is adapted to receive and process the generated failure signal SF; SF1, SF2 (or a signal dependent thereof) when setting the control position PC1, PC2 of the control valve 34 (in case the control port 65 of the spool valve 60 is pneumatically controlled) or when generating and outputting the electronic control signal Sc (in case the control port 65 of the spool valve 60 is electrically controlled). In particular, the control unit 26 prevents to use or select the switching position PS1, PS2 of the spool valve 60 (or operation mode M; M1, M2) that is assigned with the generated and outputted failure signal SF; SF1, SF2. Preferably, this is accomplished by not setting the respective control position PC1, PC2 of the control valve 34 that is assigned with the respective switching position PS1, PS2 not be used (in case the control port 65 of the spool valve 60 is pneumatically controlled) or not generating and outputting the electronic control signal Sc that is assigned with the respective switching position PS1, PS2 not be used (in case the control port 65 of the spool valve 60 is electrically controlled).

This assures that enough compressed air can be delivered to the consumer circuits 11, even if the respective desiccant cartridge 30, 31 being in drying mode MD in the selected (fully working) operation mode M; M1, M2 is drying or de-moisturing the compressed air to a lower extent. This approach considers that delivering compressed air to the consumer circuits 11 matching or exceeding a certain target system pressure value pT is more important than providing compressed air exceeding a certain degree of desiccation. In a further embodiment, the control unit 26 might select the switching position PS1, PS2 of the spool valve 60 (or operation mode M; M1, M2) that provides the highest actual system pressure value pA, in case a failure signal SF; SF1, SF2 has been generated for both switching positions PS1, PS2. This approach considers that delivering compressed air to the consumer circuits 11 at all, even not reaching a certain target system pressure value pT, can assure at least a limited operation of the consumer circuits 11.

In any case, the failure signal SF; SF1, SF2 can be reset once the issue or failure leading to the deviation of the system pressure values pA, pT2 within the predetermined tolerance T is fixed during service or the deviation is not present any more after carrying out the failure check in the monitoring steps ST1 to ST4 again. Therefore, the monitoring algorithm MA is repeatedly, e.g., after waiting a predetermined waiting time tW, determining if the actual system pressure value pA is approaching or equal to the respective target system pressure value pT; pT1, pT2, associated with the identified switching positions PS1, PS2 (or operation mode M; M1, M2), within the predetermined tolerance T.

In order to inform the driver or the fleet management system about the detection of a switching issue with the spool valve 60, a warning signal SW is generated and outputted, if at least one failure signal SF; SF1, SF2 is present. Based thereupon, an inspection or repair can be instructed.

### List of reference numerals (part of the description)

- 1: twin chamber air dryer
- 2: commercial vehicle
- 3: electropneumatic system
- 4: air inlet
- 6: compressor
- 8: first air outlet
- 11: consumer circuit
- 14: first venting outlet
- 15: second venting outlet
- 16: pressure sensor
- 26: control unit
- 28a: first outer wall of the first piston part 70a
- 28b: second outer wall of the second piston part 70b
- 30: first desiccant cartridge
- 30a: first cartridge inlet
- 30b: first cartridge outlet
- 31: second desiccant cartridge
- 31a: second cartridge inlet
- 31b: second cartridge outlet
- 32: double check valve
- 34: control valve
- 40: operating valve
- 43: air supply line
- 45: check valve
- 46: air outlet line
- 50: throttle bypass
- 60: spool valve
- 61: spool valve inlet port
- 61a: spool valve inlet channel
- 62: spool valve outlet port
- 62a: spool valve outlet channel
- 63: first spool valve exchange port
- 63a: first spool valve exchange channel
- 64: second spool valve exchange port
- 64a: second spool valve exchange channel
- 65: control port
- 65a: main control channel
- 65b: first splitted control channel
- 65b: second splitted control channel
- 66: spool valve casing
- 67: valve chamber
- 67a: interior wall
- 67b: contour of the interior wall 67a
- 68: first undercut
- 69: second undercut
- 70: piston means
- 70a: first piston part
- 70b: second piston part
- 71: control chamber
- 72: cover
- 73: sealing member
- 73a: first outer sealing member
- 73b: intermediate sealing member
- 73c: second outer sealing member
- 73d: inlet sealing member
- 74a: first supply passage
- 74b: second supply passage
- 75a: first supply channel
- 75b: second supply channel
- 76a: first inlet opening
- 76b: second inlet opening
- 77a: first interior
- 77b: second interior
- 78a: first outlet opening
- 78b: second outlet opening
- 79a: first exhaust passage
- 79b: second exhaust passage
- 80a: first exhaust channel
- 80b: second exhaust channel
- 90: spring
- 90a: first spring
- 90b: second spring
- 173: o-ring
- 273: gasket
- M: operation mode
- M1: first operation mode
- M2: second operation mode
- MA: monitoring algorithm
- MD: drying mode
- MF: failure detection mode
- MR: regeneration mode
- pA: actual system pressure value
- pT: target system pressure value
- pT1: first target system pressure value
- pT2: second target system pressure value
- pS: system pressure
- PC1: first control position of the control valve 34
- PC2: second control position of the control valve 34
- PS1: first switching position of the spool valve 60
- PS2: second switching position of the spool valve 60
- Sc: control signal
- SF: failure signal
- SF1: first failure signal
- SF2: second failure signal
- SW: warning signal
- T: tolerance
- tW: waiting time
- ST1, ST2, ST3, ST4, ST5: monitoring steps

## Claims

1. Twin chamber air dryer (1), for use in an electropneumatic system (3) of a commercial vehicle (2), said twin chamber air dryer (1) comprising:
- an air inlet (4) to be supplied with compressed air from a compressor (6),
- an air outlet (8) for delivering dried compressed air to at least one consumer circuit (11),
- a first venting outlet (14) for exhausting air;
- a first desiccant cartridge (30) and a second desiccant cartridge (31), each being selectively operatable in a drying mode (MD) and a regeneration mode (MR); and
- a spool valve (60) comprising
--- a spool valve casing (66);
--- a first spool valve exchange channel (63a) flow-connected to said first desiccant cartridge (30);
--- a second spool valve exchange channel (64a) flow-connected to said second desiccant cartridge (31);
--- a control port (65) for receiving a control signal (Sc) specifying an operation mode (M) of the twin chamber air dryer (1);
--- a first piston part (70a) assigned to said first spool valve exchange channel (63a);
--- a second piston part (70b) assigned to said second spool valve exchange channel (64a);
wherein said spool valve (60) is switchable between a first switching position (PS1) and a second switching position (PS2) by jointly or collectively actuating said first piston part (70a) and said second piston part (70b) via the same control signal (Sc) received on the control port (65) for jointly or collectively moving said first piston part (70a) and said second piston part (70b) within a valve chamber (67) formed in said spool valve casing (66) such that
- in said first switching position (PS1) of said spool valve (60) said first piston part (70a) is flow-connecting said first spool valve exchange channel (63a) to said air inlet (4) for operating said first desiccant cartridge (30) in drying mode (MD), and said second piston part (70b) is flow-connecting said second spool valve exchange channel (64a) to said first venting outlet (14) for operating said second desiccant cartridge (31) in regeneration mode (MR), and
- in said second switching position (PS2) of said spool valve (60) said first piston part (70a) is flow-connecting said first spool valve exchange channel (63a) to said first venting outlet (14) for operating said first desiccant cartridge (30) in regeneration mode (MR) and said second piston part (70b) is flow-connecting said second spool valve exchange channel (64a) to said air inlet (4) for operating said second desiccant cartridge (31) in drying mode (MD).

2. Twin chamber air dryer (1) according to claim 1, wherein said first piston part (70a) and said second piston part (70b) each comprise sealing members (73), said sealing members (73) selectively cooperating with a contour (67b) of an interior wall (67a) of said valve chamber (67) forming a first supply passage (74a) and a first exhaust passage (79a), each assigned to said first piston part (70a), and a second supply passage (74b) and a second exhaust passage (79b), each assigned to said second piston part (70a).

3. Twin chamber air dryer (1) according to claim 2, wherein said sealing members (73) selectively cooperating with said contour (67b) of said interior wall (67a) of said valve chamber (67) in such a way that
- depending on the position of said first piston part (70a) inside the valve chamber (67) said first supply passage (74a) and said first exhaust passage (79a) are selectively opened or closed, wherein said first supply passage (74a), in its open state, is flow-connecting the first spool valve exchange channel (63a) assigned to the first piston part (70a) with said air inlet (4) and said first exhaust passage (79a), in its open state, is flow-connecting said first spool valve exchange channel (63a) assigned to the first piston part (70a) with said first venting outlet (14), and
- depending on the position of said second piston part (70b) inside the valve chamber (67) said second supply passage (74b) and said second exhaust passage (79b) are selectively opened or closed, wherein said second supply passage (74b), in its open state, is flow-connecting the second spool valve exchange channel (64a) assigned to the second piston part (70b) with said air inlet (4) and said second exhaust passage (79b), in its open state, is flow-connecting said second spool valve exchange channel (64a) assigned to the second piston part (70b) with said first venting outlet (14).

4. Twin chamber air dryer (1) according to claim 2 or 3, wherein said first supply passage (74a) and said first exhaust passage (79a) are formed between said first piston part (70a) and said interior wall (67a), and said second supply passage (74b) and said second exhaust passage (79b) are formed between said second piston part (70b) and said interior wall (67a).

5. Twin chamber air dryer (1) according to claim 4, wherein said contour (67b) of said interior wall (67a) comprises a first undercut (68) and a second undercut (69) and each of said piston parts (70a, 70b) comprises a first outer sealing member (73a), a second outer sealing member (73c) and an intermediate sealing member (73b) in-between.

6. Twin chamber air dryer (1) according to claim 5, wherein
- in the open state of said first supply passage (74a) said first outer sealing member (73a) mounted on said first piston part (70a) is compressed while touching said interior wall (67a) spaced apart from said first undercut (68) and said intermediate sealing member (73b) mounted on said first piston part (70a) is uncompressed and located in the region of said first undercut (68) in said interior wall (67a), such that said interior sealing member (73b) mounted on said first piston part (70a) is not touching said interior wall (67a) allowing air flowing through said first supply passage (74a), and
- in the closed state of said first supply passage (74a) said first outer sealing member (73a) mounted on said first piston part (70a) and said intermediate sealing member (73b) mounted on said first piston part (70a) are compressed while touching said interior wall (67a) spaced apart from said first undercut (68) preventing air from flowing through said first supply passage (74a).

7. Twin chamber air dryer (1) according to claim 5 or 6, wherein
- in the open state of said first exhaust passage (79a) said intermediate sealing member (73b) mounted on said first piston part (70a) is compressed while touching said interior wall (67a) spaced apart from said first undercut (68) and said second outer sealing member (73c) mounted on said first piston part (70a) is uncompressed and located in the region of said first undercut (68) in said interior wall (67a), such that said second outer sealing member (73c) mounted on said first piston part (70a) is not touching said interior wall (67a) allowing air flowing through said first exhaust passage (79a), and
- in the closed state of said first exhaust passage (79a) said second outer sealing member (73c) mounted on said first piston part (70a) is compressed while touching said interior wall (67a) spaced apart from said first undercut (68) preventing air from flowing through said first exhaust passage (79a).

8. Twin chamber air dryer (1) according to one of the claims 5 to 7, wherein
- in the open state of said second supply passage (74b) said first outer sealing member (73a) mounted on said second piston part (70b) is compressed while touching said interior wall (67a) spaced apart from said second undercut (69) and said intermediate sealing member (73b) mounted on said second piston part (70b) is uncompressed and located in the region of said second undercut (69) in said interior wall (67a), such that said interior sealing member (73b) mounted on said second piston part (70b) is not touching said interior wall (67a) allowing air flowing through said second supply passage (74b), and
- in the closed state of said second supply passage (74b) said first outer sealing member (73a) mounted on said second piston part (70b) and said intermediate sealing member (73b) mounted on said second piston part (70b) are compressed while touching said interior wall (67a) spaced apart from said second undercut (69) preventing air from flowing through said second supply passage (74b).

9. Twin chamber air dryer (1) according to one of the claims 5 or 8, wherein
- in the open state of said second exhaust passage (79b) said intermediate sealing member (73b) mounted on said second piston part (70b) is compressed while touching said interior wall (67a) spaced apart from said second undercut (69) and said second outer sealing member (73c) mounted on said second piston part (70b) is uncompressed and located in the region of said second undercut (69) in said interior wall (67a), such that said second outer sealing member (73c) mounted on said second piston part (70b) is not touching said interior wall (67a) allowing air flowing through said second exhaust passage (79b), and
- in the closed state of said second exhaust passage (79b) said second outer sealing member (73c) mounted on said second piston part (70b) is compressed while touching said interior wall (67a) spaced apart from said second undercut (69) preventing air from flowing through said second exhaust passage (79b).

10. Twin chamber air dryer (1) according to one of the claims 2 to 9, wherein said sealing members (73) selectively cooperating with said contour (67b) of said interior wall (67a) of said valve chamber (67) in such a way that on bringing said first supply passage (74a) into its closed state said first exhaust passage (79a) is brought into its opened state, and vice versa, and on bringing said second supply passage (74b) into its closed state said second exhaust passage (79b) is brought into its open state, and vice versa.

11. Twin chamber air dryer (1) according to one of the claims 2 to 10, wherein said sealing members (73) selectively cooperating with said contour (67b) of said interior wall (67a) of said valve chamber (67) in such a way that on bringing said first supply passage (74a) into its closed state said second supply passage (74b) is brought into its open state, and vice versa, and on bringing said first exhaust passage (79a) into its closed state said second exhaust passage (79b) is brought into its open state, and vice versa, for selectively operating the first desiccant cartridge (30) assigned to the first supply passage (74a) and the first exhaust passage (79a) in regeneration mode (MR) while conversely the second desiccant cartridge (31) assigned to the second supply passage (74b) and the second exhaust passage (79b) is operated in drying mode (MD), and vice versa.

12. Twin chamber air dryer (1) according to one of the claims 2 to 11, wherein
- in said first switching position (PS1) of said spool valve (60) said first piston part (70a) is located inside the valve chamber (67) such that said sealing members (73) attached to said first piston part (70a) are opening said first supply passage (74a) and closing said first exhaust passage (79a), and said second piston part (70b) is positioned inside the valve chamber (67) such that said sealing members (73) on said second piston part (70b) are closing said second supply passage (74b) and opening said second exhaust passage (79b), for operating said first desiccant cartridge (30) in drying mode (MD) and said second desiccant cartridge (31) in regeneration mode (MR), and
- in said second switching position (PS2) of said spool valve (60) said first piston part (70a) is located inside the valve chamber (67) such that said sealing members (73) attached to said first piston part (70a) are closing said first supply passage (74a) and opening said first exhaust passage (79a), and said second piston part (70b) is positioned inside the valve chamber (67) such that said sealing members (73) on said second piston part (70b) are opening said second supply passage (74b) and closing said second exhaust passage (79b), for operating said first desiccant cartridge (30) in regeneration mode (MR) and said second desiccant cartridge (31) in drying mode (MD).

13. Twin chamber air dryer (1) according to one of the claims 2 to 12, wherein said sealing members (73) are formed as o-rings (173) having a circular shape and circular cross-section, or are formed as gaskets (273) having a non-circular-shape and/or a non-circular cross-section.

14. Twin chamber air dryer (1) according to one of the claims 2 to 13, wherein said sealing members (73) are formfitted with the respective piston part (70a, 70b) and/or materially bonded or bound to the respective piston part (70a, 70b).

15. Twin chamber air dryer (1) according to one of the preceding claims, wherein
- in said first switching position (PS1) said first spool valve exchange channel (63a) is flow-connected to said air inlet (4) via a first supply channel (75a), being formed by a first interior (77a) inside said first piston part (70a) or being attached to said first piston part (70a), and/or
- in said second switching position (PS2) said second spool valve exchange channel (64a) is flow-connected to said air inlet (4) via a second supply channel (75b), being formed by a second interior (77b) inside said second piston part (70b) or being attached to said second piston part (70b).

16. Twin chamber air dryer (1) according to one of the preceding claims, wherein
- in said second switching position (PS2) said first spool valve exchange channel (63a) is flow-connected to said first venting outlet (14) via a first exhaust channel (80a), being formed between a first outer wall (28a) of said first piston part (70a) and said interior wall (67a) of said valve chamber (67), and/or
- in said first switching position (PS1) said second spool valve exchange channel (64a) is flow-connected to said first venting outlet (14) via a second exhaust channel (80b), being formed between a second outer wall (28b) of said second piston part (70b) and said interior wall (67a) of said valve chamber (67).

17. Twin chamber air dryer (1) according to claim 16, wherein in said first switching position (PS1) as well as in said second switching position (PS2) said first supply channel (75a) is sealed against said first exhaust channel (80a) by said sealing members (73), and said second supply channel (75b) is sealed against said second exhaust channel (80b) by said sealing members (73).

18. Twin chamber air dryer (1) according to one of the preceding claims, wherein said control signal (Sc) is electronically or pneumatically receivable on said control port (65) of said spool valve (60), said first piston part (70a) and said second piston part (70b) are jointly or collectively actuated via the same control signal (Sc) received on said control port (65) by exerting a force on said first piston part (70a) and said second piston part (70b), said force being dependent on said control signal (Sc).

19. Twin chamber air dryer (1) according to claim 18, wherein said pneumatically received control signal (Sc) is effective inside at least one control chamber (71; 71a, 71b) of said spool valve (60), said at least one control chamber (71; 71a, 71b) being in cooperation with said first piston part (70a) and said second piston part (70b) such that said first piston part (70a) and said second piston part (70b) are jointly or collectively actuated via the same pneumatic control signal (Sc) received on the control port (65).

20. Twin chamber air dryer (1) according to claim 19, wherein said first piston part (70a) and said second piston part (70b) each cooperate with a different control chamber (71a, 71b) with the same control signal (Sc) being effective in each of said different control chambers (71a, 71b).

21. Twin chamber air dryer (1) according to one of the preceding claims, wherein said first piston part (70a) and said second piston part (70b) are separated from each other or are interacting with each other, e.g., by means of glueing, welding, joining with thread, screwing, unconnectedly touching each other.

22. Twin chamber air dryer (1) according to one of the preceding claims, wherein said first piston part (70a) and said second piston part (70b) are each spring-preloaded by at least one spring (80; 80a, 80b) forcing said first piston part (70a) and said second piston part (70b) into an initial position.

23. Twin chamber air dryer (1) according to one of the preceding claims, wherein
- in said first switching position (PS1) of said spool valve (60) or in a first operation mode (M1) of said twin chamber air dryer (1) a first cartridge outlet (30b) of said first desiccant cartridge (30) being operated in drying mode (MD) is connected to said air outlet (8) via a double check valve (32) and a second cartridge outlet (31b) of said second desiccant cartridge (31) is connected to said first cartridge outlet (30b) of said first desiccant cartridge (30) via a throttle bypass (50) for providing a purging air stream to said second desiccant cartridge (31) being operated in regeneration mode (MR), and
- in said second switching position (PS2) of said spool valve (60) or in a second operation mode (M2) of said twin chamber air dryer (1) said second cartridge outlet (31b) of said second desiccant cartridge (31) being operated in drying mode (MD) is connected to said air outlet (8) via said double check valve (32) and said first cartridge outlet (30b) of said first desiccant cartridge (30) is connected to said second cartridge outlet (31b) of said second desiccant cartridge (31) via said throttle bypass (50) for providing a purging air stream to said first desiccant cartridge (30) being operated in regeneration mode (MR).

24. An electropneumatic system (3) for use in a commercial vehicle (2), said electropneumatic system (3) comprising
a compressor (6), pneumatic consumer circuits (11), a control unit (26) and a twin chamber air dryer (1) according to one of the preceding claims,
said air inlet (4) of said twin chamber air dryer (1) being connected to said compressor (6) for receiving compressed air, and
said air outlet (8) of said twin chamber air dryer (1) being connected to said pneumatic consumer circuits (11) for delivering dried compressed air,
wherein said control unit (26) is adapted to switch the operation mode (M; M1, M2) of the twin chamber air dryer (1) by directly or indirectly specifying the control signal (Sc) transmitted to the control port (65) of the spool valve (60).

25. The electropneumatic system (3) according to claim 24, wherein said control unit (26) comprises a monitoring algorithm (MA) adapted to
- identify the switching position (PS1, PS2) of the spool valve (60) or the operation mode (M; M1, M2) of the twin chamber air dryer (1);
- determine an actual system pressure value (pA) characterizing a system pressure (pS) that is effective at the first air outlet (8) leading to the consumer circuits (11), in particular via a pressure sensor (16) located in an air outlet line (46) leading to the first air outlet (8);
- determine a target system pressure value (pT) that is expected to be reached by the actual system pressure value (pA) in the identified switching position (PS1, PS2) of the spool valve (60) or in the identified operation mode (M; M1, M2) of the twin chamber air dryer (1);
- check if the determined actual system pressure value (pA) is approaching or is equal to the determined target system pressure value (pT) for the identified switching position (PS1, PS2) of the spool valve (60) or for the identified operation mode (M; M1, M2) of the twin chamber air dryer (1) within a predetermined tolerance (T); and
- generate a failure signal (SF) for the identified switching position (PS1, PS2) of the spool valve (60) or for the identified operation mode (M; M1, M2) of the twin chamber air dryer (1) if the determined actual system pressure value (pA) deviates from the determined target system pressure value (pT) by more than the predetermined tolerance (T);
wherein the control unit (26) is adapted to switch the operation mode (M; M1, M2) of the twin chamber air dryer (1) in dependence of the generated failure signal (SF).

26. Method for operating the electropneumatic system (3) according to claim 24 or 25, the method comprising the steps of
- identifying the switching position (PS1, PS2) of the spool valve (60) or the operation mode (M; M1, M2) of the twin chamber air dryer (1) (ST1);
- determining an actual system pressure value (pA) characterizing a system pressure (pS) that is effective at the first air outlet (8) leading to the consumer circuits (11) (ST2);
- determining a target system pressure value (pT) that is expected to be reached by the actual system pressure value (pA) in the identified switching position (PS1, PS2) of the spool valve (60) or in the identified operation mode (M; M1, M2) of the twin chamber air dryer (1) (ST3);
- checking if the determined actual system pressure value (pA) is approaching or is equal to the determined target system pressure value (pT) for the identified switching position (PS1, PS2) of the spool valve (60) or for the identified operation mode (M; M1, M2) of the twin chamber air dryer (1) within a predetermined tolerance (T) (ST4);
- generating a failure signal (SF) for the identified switching position (PS1, PS2) of the spool valve (60) or for the identified operation mode (M; M1, M2) of the twin chamber air dryer (1) if the determined actual system pressure value (pA) deviates from the determined target system pressure value (pT) by more than the predetermined tolerance (T) (ST5); and
- switching the operation mode (M; M1, M2) of the twin chamber air dryer (1) in dependence of the generated failure signal (SF).

27. Method according to claim 26, wherein switching the operation mode (M; M1, M2) of the twin chamber air dryer (1) in dependence of the generated failure signal (SF) includes preventing to use or select the switching position (PS1, PS2) of the spool valve (60) or the operation mode (M; M1, M2) of the twin chamber air dryer (1) that is assigned with the generated failure signal (SF; SF1, SF2).
